# EUROPÄISCHE PATENTSCHRIFT

(11) **EP 2 108 556 B1**
(45) Veröffentlichungstag und Bekanntmachung des Hinweises auf die Patenterteilung: **10.10.2012**
(21) Anmeldenummer: 09005150.9
(22) Anmeldetag: 08.04.2009
(51) Int. Cl.: B60T 13/66, B60T 13/68, B60T 17/22

(54) **Verfahren und Vorrichtung zum Steuern einer Druckluftversorgungseinrichtung beim Ausfall eines Regelkreises eines EBS-Bremssystems**
Method and device for controlling a pressurised air supply device when a closed loop of an EBS braking system malfunctions
Procédé et dispositif de commande d'un dispositif d'alimentation en air comprimé lors de la panne d'un circuit de réglage d'un système de frein EBS

(30) Priorität: 11.04.2008 DE 102008018469; 30.04.2008 DE 102008021822
(43) Veröffentlichungstag der Anmeldung: 14.10.2009
(73) Patentinhaber: KNORR-BREMSE Systeme für Nutzfahrzeuge GmbH, 80809 München (DE)
(72) Erfinder: Hilberer, Eduard, 68766 Hockenheim (DE)
(74) Vertreter: Schönmann, Kurt

(56) Entgegenhaltungen:
- EP-B1- 1 552 996
- WO-A1-93/09012
- KR-A- 20060 102 570

## Beschreibung

Die Erfindung betrifft ein Verfahren zum Steuern einer Druckmittelversorgungseinrichtung eines Nutzfahrzeugs, wobei bei einem Ausfall eines Regelkreises eines EBS-Bremssystems, d.h. im Redundanzfall, ein Redundanzkreis wirksam wird, welcher einen Redundanzdruck zur Bremsung des Fahrzeugs bereitstellt, und weiterhin der Druck in einem dem ausgefallenen Regelkreis zugeordneten Druckmittelvorratsbehälter auf einen für einen zugeordneten Bremszylinder nicht überlastenden Wert eingestellt wird.

Die Erfindung betrifft weiterhin eine Vorrichtung zum Steuern einer Druckmittelversorgungseinrichtung eines Nutzfahrzeugs mit einer gemeinsamen Steuerelektronik, die geeignet ist, eine Fehlerbotschaft von einer elektronischen Steuereinheit eines EBS-Bremssystems zu empfangen und den Druck im einem einem ausgefallenen Regelkreis zugeordneten Druckmittelvorratsbehälter auf einen für den zugeordneten Bremszylinder nicht überlastenden Wert einzustellen.

Nutzfahrzeuge verfügen üblicherweise über eine Druckmittelversorgungseinrichtung, zum Beispiel eine Druckluftversorgungseinrichtung zur Versorgung druckluftverbrauchender Fahrzeugsysteme des Nutzfahrzeugs, zu denen beispielsweise eine druckluftbetriebene Betriebsbremse oder eine Luftfederung zählt. Um insbesondere einen kurzfristigen Bedarf an Druckluft befriedigen zu können, sind in dem Nutzfahrzeug weiterhin Druckmittelvorratsbehälter angeordnet, aus denen der Druckluftbedarf eines Verbrauchers zumindest kurzfristig gedeckt werden kann. Diese Druckmittelvorratsbehälter können zur Einsparung von Bauraum mit einem erhöhten Speicherdruck beaufschlagt werden, um bei gleicher gespeicherter Normluftmenge Bauraum einsparen zu können. Da ein erhöhter Vorratsdruck nicht von allen Druckluftverbrauchern im Nutzfahrzeug benötigt wird und diese eventuell sogar beschädigen könnte, sind Mittel zur Druckreduzierung zwischen dem Druckmittelvorratsbehälter und den Druckluftverbrauchern vorzusehen.

Ein Beispiel hierfür sind die Bremszylinder einer Betriebsbremse, welche gewöhnlich bis zu einem Betriebsbremsdruck von 10 bar ausgelegt sind. Wird Druckluft in dem Druckmittelvorratsbehälter unter einem Druck von beispielsweise 11,5 bar bevorratet, so könnte eine dauerhafte direkte Verbindung zwischen dem Druckmittelvorratsbehälter und dem Bremszylinder der Betriebsbremse letzteren beschädigen, falls keine Mittel zur Druckreduzierung in der Verbindungsleitung vorgesehen sein sollten. Eine Möglichkeit zur Druckreduzierung ist ein Druckregelmodul eines EBS-Bremssystems, welches als Druckmodulator in der Verbindung zwischen einem Druckmittelvorratsbehälter und einem Betriebsbremszylinder des Nutzfahrzeugs angeordnet ist. Gesteuert wird das Druckregelmodul üblicherweise von einer elektronischen Steuereinheit, die einen über einen Bremswertgeber detektierten Bremswunsch in eine Druckbeaufschlagung der Betriebsbremszylinder umwandelt. Dabei werden neben einer einfachen Bremsfunktion weitere Zusatzfunktion, beispielsweise eine ABS-Funktionalität, eine ASR-Funktionalität sowie ESP und eventuell weitere Zusatzfunktionen, durch das EBS-Bremssystem umgesetzt. Das EBS-Bremssystem verfügt zu diesem Zweck über einen Regelkreis, über den die an einzelnen Bremszylindern anliegenden Bremsdrücke dynamisch anpassbar sind. Insbesondere ist somit eine einfache Reduzierung eines erhöhten Vorratsdruckes, der auf Dauer für die Betriebsbremszylinder unverträglich wäre, realisierbar.

Aus Sicherheitsgründen ist es notwendig, bei einem Defekt dieses Regelkreises einen rein pneumatischen Kreis zur Absicherung zur Verfügung zu haben, um weiterhin eine Bremsung des Nutzfahrzeugs durchführen zu können. Dabei wird eine direkte Verbindung zwischen dem Druckmittelvorratsbehälter und dem Betriebsbremszylinder realisiert, wobei die Druckbeaufschlagung des Betriebsbremszylinders direkt über den Bremswertgeber moduliert wird. Dabei kann es zu einer Druckbeaufschlagung des Betriebsbremszylinders mit einem auf Dauer ungeeigneten hohen Betriebbremsdruck kommen, der zu einer Beschädigung des Betriebsbremszylinders führt. Eine ähnliche Problematik besteht, wenn anstelle von Druckluft ein flüssiges Druckmittel verwendet wird.

Aus der EP 1 552 996 B1 ist ein gattungsgemäßes Verfahren bekannt, welche dieses Problem dadurch löst, dass ein in einem Druckmittelvorratsbehälter vorhandener überschüssiger Druck beim Ausfall des Regelkreises über eine Entlüftungseinrichtung einer Druckmittelversorgungseinheit während einer Zwangsregeneration abgelassen wird. Nachteilig hierbei ist, dass die verfügbare Druckabbaurate aufgrund der Vorgaben des Regenerationszyklus beschränkt ist. Weiterhin werden sämtliche an die Druckluftversorgungsanlage angeschlossenen Verbraucher dauerhaft nur noch mit einem reduzierten Versorgungsdruck bedient.

Der Erfindung liegt daher die Aufgabe zugrunde, eine alternative Möglichkeit zum Steuern einer Druckmittelversorgungsanlage bei einem Ausfall des EBS-Bremssystems bereitzustellen, bei der bereits verdichtet gespeichertes Druckmittel innerhalb des Nutzfahrzeugs verbraucht wird.

Diese Aufgabe wird mit den Merkmalen der unabhängigen Ansprüche gelöst.

Vorteilhafte Ausführungsformen ergeben sich aus den abhängigen Ansprüchen.

Das gattungsgemäße Verfahren wird dadurch weiterentwickelt, dass im Redundanzfall zumindest ein verbraucherseitig an einem Teilsystemanschluss der Druckmittelversorgungseinrichtung angeschlossenes Teilsystem mit einem eigenem Vorratsbehälter von der Druckmittelversorgungseinrichtung separiert wird, um eine Druckanpassung in dem Teilsystem zu verhindern. Durch das Sperren der Druckversorgung eines nicht defekten Teilsystems kann das in dem Teilsystem bereits vorhandene Druckniveau gehalten werden, wodurch die Funktionalität des Teilsystems verbessert werden kann. Bereits verdichtetes Druckmittel kann auf diese Weise zum Betrieb des Teilsystems verwendet werden, wobei keine Energie verschwendet wird. Ein Teilsystem kann jedes druckmittelbetriebene System des Nutzfahrzeugs sein, das über einen eigenen Druckmittelvorrat verfügt und daher zeitweise ohne Nachförderung von Druckmittel betrieben werden kann. Möglich Teilsysteme umfassen zum Beispiel ein ELC-System, ein PBS-System, ein EDC-System, ein AGR-System, ein ETC-System und ein Retardersystem. Auch eine Druckanlage eines Anhängers kann im Sinne dieser Erfindung vollständig oder teilweise als ein Teilsystem betrachtet werden, das separiert werden kann. Als Druckmittel kommt neben einem gasförmigen Druckmittel auch ein flüssiges Druckmedium in Frage, welches bei einem hydraulischen Bremssystem verwendet werden kann. Wenn ein flüssiges Druckmittel, zum Beispiel Hydrauliköl, verwendet wird, ist unter einem Ablassen von Druck über eine Entlüftung beziehungsweise unter einem Verbrauchen von Druckmittel insbesondere ein Zurückführen in einen drucklosen Vorratsbehälter zu verstehen.

Nützlicherweise kann weiterhin vorgesehen sein, dass die Separierung durch das Sperren eines dem Teilsystemanschluss des Teilsystems zugeordneten Überströmventils erreicht wird. Ein Überströmventil ist einfach ansteuerbar und oftmals im Bereich der einzelnen Verbraucheranschlüsse der Druckmittelversorgungseinrichtung bereits verbaut, weshalb kein zusätzliches Bauteil notwendig ist.

Vorzugsweise kann vorgesehen sein, dass im Redundanzfall der Druckreglerabschaltdruck und/oder die Druckbegrenzung der Druckmittelversorgungseinrichtung auf einen vom Normalbetrieb verschiedenen Wert verändert wird. Durch die Anpassung des Druckreglerabschaltdrucks und/oder der Druckbegrenzung der Druckmittelversorgungseinrichtung kann nach dem Ablassen beziehungsweise dem Verbrauchen von überschüssigem Druckmittel, zum Beispiel Druckluft oder Hydrauliköl, aus dem Druckmittelvorratsbehälter ein erneutes Auftreten eines zu hohen Druckniveaus in dem Druckmittelvorratsbehälter vermieden werden.

In diesem Zusammenhang ist vorgesehen, dass bei einer notwendigen Nachförderung von Druckmittel für das nicht defekte Teilsystem der Druckreglerabschaltdruck und/oder die Druckbegrenzung der Druckmittelversorgungseinrichtung für die Nachförderphase auf einen im Normalbetrieb üblichen Wert eingestellt wird und dass nach Beendigung der Nachförderung eine erneute Druckanpassung aufgrund des ausgefallenen Regelkreises erfolgt. Auf diese Weise können für sämtliche an die Druckmittelversorgungseinrichtung angeschlossenen Teilsysteme die notwendigen Versorgungsdrücke bereitgestellt werden.

Besonders bevorzugt ist dabei, dass während der notwendigen Nachförderung von Druckmittel für das nicht defekte Teilsystem der ausgefallene Regelkreis durch ein Überströmventil von einer Nachversorgung ausgeschlossen wird, um eine in diesem Regelkreis unerwünschte Druckerhöhung zu vermeiden. Da auf diese Weise keine erneuten Druckspitzen in den Betriebsbremszylindern auftreten können, ist dies für die Lebensdauer der Betriebsbremszylinder vorteilhaft.

Bei einigen Ausführungsformen kann vorgesehen sein, dass der sich in dem Druckmittelvorratsbehälter einstellende Druck mit einem Drucksensor erfasst wird, wobei der gemessene Druck an eine gemeinsame Steuerelektronik einer Druckmittelversorgungseinrichtung übertragen wird. Durch das Erfassen und Übertragen des gemessenen Druckes in dem Betriebsbremsbehälter an die gemeinsame Steuerelektronik der Druckmittelversorgungseinrichtung ist bestimmbar, ob bei einem Ausfall des EBS-Bremssystems das Druckniveau in dem Druckmittelvorratsbehälter reduziert werden muss. Die abzulassende Druckmittelmenge kann daher an das momentane Druckniveau in den Druckmittelvorratsbehältern angepasst werden.

Es kann vorgesehen sein, dass bei einem Ausfall der elektronischen Steuereinheit des EBS-Bremssystems die aktuellen Bremszylinderdrücke nicht mehr an eine gemeinsame Steuerelektronik der Druckmittelversorgungseinrichtung übermittelt werden und dass die gemeinsame Steuerelektronik daraufhin den Druckreglerabschaltdruck und/oder die Druckbegrenzung der Druckmittelversorgungseinrichtung reduziert. Ein Defekt der elektronischen Steuereinheit ist vorzugsweise über eine serielle Kommunikationsleitung detektierbar, an die das elektronische Steuergerät angeschlossen ist. Bleibt beispielsweise eine vorgesehene Übertragung der aktuellen Bremszylinderdrücke aus, kann auf eine Fehlfunktion in dem EBS-Bremssystem geschlossen werden, worauf das gemeinsame Steuergerät mit einer Absenkung des Druckreglerabschaltdrucks und/oder der Druckbegrenzung reagiert, um die Bremszylinder vor einer Überbelastung zu schützen. Weiterhin ist das Absenken des bereitgestellten Versorgungsdrucks energiesparender als ein ständiges Nachfördern und Ablassen von Druckmittel, zum Beispiel von Druckluft oder Hydrauliköl. Die gemeinsame Steuerelektronik kann die Botschaften des elektronischen Steuergeräts mit den aktuellen Bremszylinderdrücken beispielsweise direkt gesendet bekommen oder selbst über einen Fahrzeugbus abfragen.

Weiterhin kann vorgesehen sein, dass eine aktuelle Fehlerbotschaft, die zumindest den Fehlerstatus der einzelnen Druckmodule beinhaltet, nicht vollständig an eine gemeinsame Steuerelektronik der Druckmittelversorgungseinrichtung übermittelt wird und dass die gemeinsame Steuerelektronik daraufhin den Druckreglerabschaltdruck und/oder die Druckbegrenzung der Druckmittelversorgungseinrichtung reduziert. Auch durch das absichtliche oder defektbedingte Senden beziehungsweise Bereitstellen einer unvollständigen Fehlerbotschaft kann die elektronische Steuereinheit die gemeinsame Steuerelektronik zu einem Absenken des Druckreglerabschaltdrucks und/oder der Druckbegrenzung der Druckmittelversorgungseinrichtung veranlassen.

Bei einer bevorzugten Ausführungsform ist vorgesehen, dass Druckluft als Druckmittel verwendet wird.

Damit zusammenhängend kann vorgesehen sein, dass ein pneumatischer oder pneumatisch-mechanischer Redundanzkreis verwendet wird.

Es ist jedoch auch möglich, dass ein flüssiges Medium als Druckmittel verwendet wird.

Die gattungsgemäße Vorrichtung wird dadurch weiterentwickelt, dass die gemeinsame Steuerelektronik geeignet ist, bei einem Ausfall eines Regelkreises eines EBS-Bremssystems, d.h. im Redundanzfall, zumindest ein Verbraucherseitig an einem Teilsystemanschluss der Druckmittelversorgungseinrichtung angeschlossenes Teilsystem mit einem eigenem Vorratsbehälter von der Druckmittelversorgungseinrichtung zu separieren, um eine Druckanpassung in dem Teilsystem zu verhindern.

Auf diese Weise werden die Vorteile und Besonderheiten des erfindungsgemäßen Verfahrens auch im Rahmen einer Vorrichtung umgesetzt.

Dies gilt auch für die nachfolgend angegeben besonders bevorzugten Ausführungsformen der erfindungsgemäßen Vorrichtung.

Diese wird vorteilhafterweise dadurch weitergebildet, dass die Separierung des Teilsystems durch das Sperren eines dem Teilsystemanschluss zugeordneten Überströmventils erfolgt.

Nützlicherweise ist vorgesehen, dass die gemeinsame Steuerelektronik geeignet ist, im Redundanzfall den Druckreglerabschaltdruck und/oder die Druckbegrenzung der Druckmittelversorgungseinrichtung auf einen vom Normalbetrieb verschiedenen Wert zu verändern.

Vorteilhafterweise kann vorgesehen sein, dass die gemeinsame Steuerelektronik geeignet ist, bei einer notwendigen Nachförderung von Druckmittel für das nicht defekte Teilsystem einen Druckreglerabschaltdruck und/oder eine Druckbegrenzung der Druckmittelversorgungseinrichtung für die Nachförderphase auf einen im Normalbetrieb üblichen Wert einzustellen und dass die gemeinsame Steuerelektronik geeignet ist, nach Beendigung der Nachförderung eine erneute Druckanpassung aufgrund des ausgefallenen Regelkreises durchzuführen.

Vorzugsweise ist vorgesehen, dass die gemeinsame Steuerelektronik geeignet ist, während der notwendigen Nachförderung von Druckmittel für das nicht defekte Teilsystem den ausgefallene Regelkreis durch ein Überströmventil von einer Nachversorgung auszuschließen, um eine in diesem Regelkreis unerwünschte Druckerhöhung zu vermeiden.

Bevorzugt ist, dass die gemeinsame Steuerelektronik geeignet ist, einen Druckreglerabschaltdruck und/oder eine Druckbegrenzung der Druckmittelversorgungseinrichtung auf einen vom Normalbetrieb verschiedenen Wert zu verändern.

Insbesondere kann auch vorgesehen sein, dass die gemeinsame Steuerelektronik geeignet ist, zumindest ein in einer Versorgungsleitung eines nicht defekten Teilsystems angeordnetes Überströmventil zu sperren, um eine Druckabsenkung in dem nicht defekten Teilsystem zu verhindern.

In diesem Zusammenhang ist es von Nutzen, dass die gemeinsame Steuerelektronik geeignet ist, während einer notwendigen Nachförderung von Druckmittel für ein nicht defektes Teilsystem den ausgefallenen Regelkreis durch ein Überströmventil von einer Nachversorgung auszuschließen, um eine unerwünschte Druckerhöhung zu verhindern.

Die Erfindung wird nun mit Bezug auf die begleitenden Zeichnungen anhand einer besonders bevorzugten Ausführungsform beispielhaft erläutert.

Es zeigen:
- Figur 1: eine schematische Darstellung einer erfindungsgemäßen Vorrich- tung;
- Figur 2: eine vereinfachte Darstellung eines Nutzfahrzeugs einer erfindungs- gemäßen Vorrichtung;
- Figur 3: ein Flussdiagramm eines erfindungsgemäßen Verfahrens und
- Figur 4: einen zeitlichen Druckverlauf in einem Behälter der Betriebsbremse und einem Vorratsbehälter eines nicht betroffenen Teilsystems.

In den folgenden Zeichnungen bezeichnen gleiche Bezugszeichen gleiche oder gleichartige Teile.

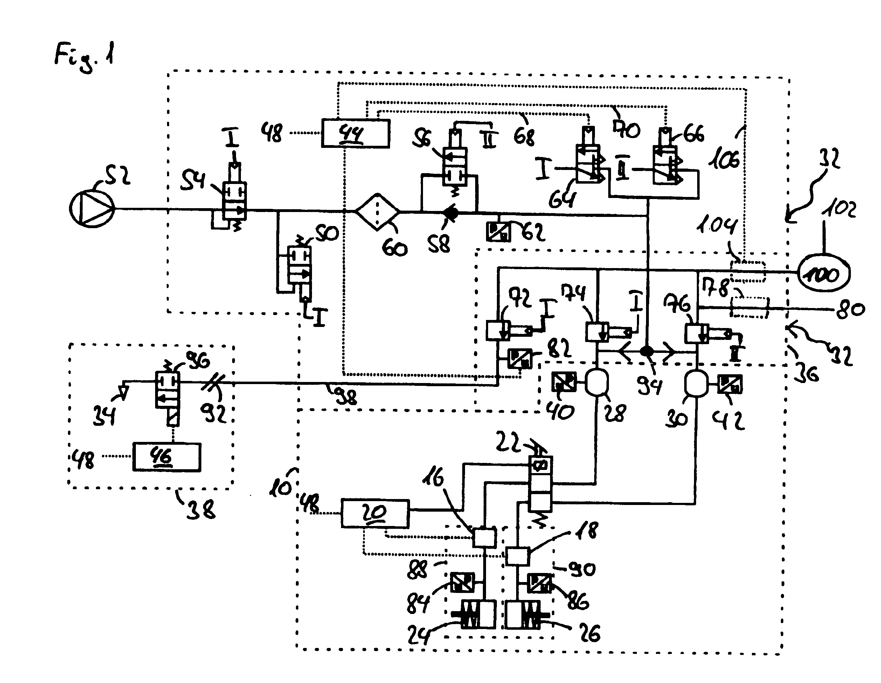

Figur 1 zeigt eine schematische Darstellung einer erfindungsgemäßen Vorrichtung. Ein EBS-Bremssystem 10 mit einer elektronischen Steuereinheit 20, Druckregelmodulen 16, 18, einen Bremswertgeber 22, Bremszylindern 24, 26 und Druckmittelvorratsbehältern 28, 30 ist stromabwärts an ein Mehrkreisschutzventil 36 mit Überströmventilen 72, 74, 76, 78 und 106 angeschlossen. Das Mehrkreisschutzventil 36 verfügt über einen Anhängeranschluss 80, einen Teilsystemanschluss 102 für ein bis auf einen Vorratsbehälter 100 nicht dargestelltes Teilsystem und versorgt über einen weiteren Anschluss ein Subsystem 38, das beispielsweise eine Luftfederung darstellen kann. Ist das Subsystem 38 keine Luftfederung, so kann das nicht dargestellte Teilsystem eine Luftfederung sein. Das Mehrkreisschutzventil 36 selbst ist Teil einer Druckmittelversorgungseinrichtung 32, die eine gemeinsame Steuerelektronik 44, einen Filter 60 zur Druckluftaufbereitung und verschiedene Magnetventile 50, 54, 56, 64 und 66, die insbesondere zur Regeneration des Filters 60 und zur Regelung der verschiedenen Versorgungsdrücke vorgesehen sind. Die Druckmittelversorgungseinrichtung 32 bezieht ihre noch nicht aufbereitete Druckluft von einem Drucklufterzeuger 52, der beispielsweise als ein einfacher Kompressor mit einer ESS-Steuerung, ein über eine Kupplung vollständig abschaltbarer Kompressor oder als Verbrennungsmotor, mit der zusätzlichen Funktionalität der Drucklufterzeugung in Schubphasen, ausgebildet sein kann. Das EBS-Bremssystem 10 umfasst also einen elektronisch gesteuerten Druckmittelversorgungsteil, welcher wiederum die elektronisch gesteuerte Druckmittelversorgungseinheit 32 und den Drucklufterzeuger 52 umfasst, einen Bremswertgeber 22 zur Erfassung einer Fahrer-Bremsanforderung und Abgabe eines entsprechenden elektrischen Anforderungssignals und eine elektrischen Steuereinheit 20, die mit dem Bremswertgeber 22 verbunden ist, und unter Berücksichtigung verschiedener Einflussgrößen in Abhängigkeit vom Bremswertgeber-Anforderungssignal Solldrücke für die Bremszylinder 24, 26 von Rädern 14 der Fahrzeugs 12 ermittelt und die Druckregelmodule 16, 18 zur Aussteuerung der Solldrücke in die Bremszylinder 24, 26 veranlasst, die aus dem zumindest einen Druckmittelvorratsbehälter 28, 30 entnommen werden. Das EBS-Bremssystem 10 ist also unter anderem dadurch charakterisiert, dass ein Bremszylinderdruck an einzelnen Rädern 14 mittels elektronischer Druckregelmodule 16, 18 geregelt wird, die mit der elektronischen Steuereinheit verbunden sind und dass eine Fahrer-Bremsanforderung über den Bremswertgeber 22 erfasst und der elektronischen Steuereinheit 20 zugeführt wird, die unter Berücksichtigung verschiedener Einflussgrößen Solldrücke für die Bremszylinder 24, 26 ermittelt, welche von den Druckregelmodulen 16, 18 den einzelnen Bremszylindern 24, 26 zugeführt werden, wobei ein Druckmittel aus zumindest einem Druckmittelvorratsbehälter 28, 30 entnommen wird, dessen Druck durch eine elektronisch gesteuerte Druckmittelversorgungseinrichtung 32, die einen Druckregler 50 umfassen kann, eingestellt wird.

Im Normalbetrieb erzeugt der Drucklufterzeuger 52 komprimierte Druckluft, die über das Absperrventil 54 durch den Filter 60 und ein Rückschlagventil 58 zur Absicherung des Mehrkreisschutzventils 36 in den Bereich des Mehrkreisschutzventils 36 gefördert wird. Die dargestellten 3/2-Wegeventile 64, 66 stellen Steuerdrücke I, II zur Verfügung, die wiederum wahlweise in verschiedenen Kombinationen die Überströmventile 72, 74, 76 sowie das Absperrventil 54, das Druckreglerventil 50 und das Regenerationsventil 56 vorsteuern. Die 3/2-Wegeventile 64, 66 werden wiederum über elektrische Steuerleitungen 68, 70 von der gemeinsamen Steuerelektronik 44 angesteuert und eine Druckbefüllung des dem Teilsystemanschluss 102 zugeordneten Vorratsbehälters 100 kann über ein von einer Steuerleitung 106 gesteuertes Überströmventil 104 beeinflusst werden. Alternativ zu der pneumatischen Vorsteuerung ist insbesondere bei dem Regenerationsventil 56 auch eine direkte elektrische Ansteuerung durch die gemeinsame Steuerelektronik 44 denkbar. Die pneumatische Ansteuerung der Überströmventile 72, 74, 76 in dem Mehrkreisschutzventil 36 kann beispielsweise zur Absperrung verschiedener Anschlüsse verwendet werden, um auf diese Weise die Befüllreihenfolge der verschiedenen Druckluftverbraucherkreise festlegen zu können beziehungsweise undichte Verbraucherkreise vollständig von der Druckluftversorgung ausschließen zu können. Die exakte Anzahl der Magnetventile 64, 66 zur Erzeugung pneumatischer Steuerdrücke I und II kann je nach Bedarf variiert werden und die hier angegebene Ausführungsform ist lediglich beispielhaft zu verstehen. Insbesondere können weitere Magnetventile zur Erzeugung weiterer Steuerdrücke vorgesehen sein, um die Ventile 50, 54, 56, 72, 74, 78 in anderen nicht dargestellten Kombinationen ansteuern zu können. Drucksensoren 62, 82 sind ebenfalls in üblicher Weise in der Druckmittelversorgungseinrichtung 32 angeordnet, um an verschiedenen Stellen herrschende Drücke zu bestimmen. Der Drucksensor 62 bestimmt beispielsweise den im Bereich des Mehrkreisschutzventils 36 herrschenden Versorgungsdruck, während der Drucksensor 82 den verbraucherseitig im Bereich eines Anschlusses des Mehrkreisschutzventils 36 herrschenden Anschlussdruck bestimmt.

Im Folgenden wird die Funktionsweise der erfindungsgemäßen Druckregelung genauer erläutert. Solange kein Ausfall des EBS-Bremssystems 10 vorliegt, werden die Betriebsmittelvorratsbehälter 28, 30 bis zu einem üblichen Druck von zum Beispiel 11,5 bar befüllt. Gleichzeitig wird der Vorratsbehälter 100 an dem Teilsystemanschluss 102 befüllt. Wird über den Bremswertgeber 22 von dem Fahrer eine Bremsung eingeleitet, wird dies über eine elektrische Leitung von der elektronischen Steuereinheit 20 detektiert und in Signale umgewandelt, die an Druckregelmodule 16, 18 übertragen werden. Die Druckregelmodule 16, 18 beaufschlagen die jeweils zugeordneten Bremszylinder 24, 26 mit einem jeweils angepassten Bremsdruck, welcher wiederum von Drucksensoren 84, 86 detektierbar ist. Dabei können insbesondere mehrere separate Regelkreise 88, 90 vorgesehen sein, die beispielsweise verschiedene Achsen des Nutzfahrzeugs mit jeweils angepassten Bremsdrücken versorgen können. Falls ein Regelkreis, zum Beispiel der Regelkreis der Vorderachse 88 ausfällt, ist ein rein pneumatischer Redundanzkreis vorgesehen, der den Druckmittelvorratsbehälter 28 über den Bremswertgeber 22 direkt mit dem zugeordneten Bremszylinder 24 koppelt. Das Druckregelmodul 16 kann dabei durchgesteuert oder umgangen werden. Die Beaufschlagung des Bremszylinders 24 erfolgt direkt durch eine mechanische Regelung in dem Bremswertgeber 22. Der in dem Druckmittelvorratsbehälter 28 herrschende Druck kann durch einen Drucksensor 40 bestimmt werden, wobei der gemessene Druck entweder direkt an die gemeinsame Steuerelektronik 44 oder mittelbar über die elektronische Steuereinheit und den Umweg über einen Datenbus 48, zum Beispiel den CAN-Bus, übertragen wird. Für den Regelkreis der Hinterachse 90 ist analog ein weiterer pneumatischer Redundanzkreis vorgesehen, wobei die Druckmittelversorgung dieses Regelkreises über den separaten Druckmittelvorratsbehälter 30 mit einem eigenen Drucksensor 42 realisiert ist. Der Ausfall der Regelkreises der Vorderachse 88 wird durch die elektronische Steuereinheit 20 detektiert, woraufhin diese über den Datenbus 48 eine entsprechende Fehlerbotschaft an die gemeinsame Steuerelektronik 44 schickt. Je nach dem, ob in dem Druckmittelvorratsbehälter 28 ein für den Bremszylinder 24 zu hoher Druck herrscht, könnte die gemeinsame Steuerelektronik 44 überschüssige Druckluft aus dem Druckmittelvorratsbehälter 28 ablassen, wie es im Folgenden beschrieben wird. Zunächst sendet die gemeinsame Steuerelektronik 44 eine Anweisung zum Ablassen von Druckluft über den Datenbus 48 an ein weiteres Steuergerät 46 des Subsystems 38. Das Subsystem 38 umfasst neben einem weiterem Ablassventil 96 und einer Entlüftung 34 weitere Komponenten 92, welche beispielsweise auch einen eigenen Vorratsbehälter für Druckluft umfassen können. Aufgrund der Anweisung zum Ablassen von Druckluft steuert das weitere Steuergerät 46 das weitere Ablassventil 96 derart an, das über die Entlüftung 34 Druckluft aus dem Subsystem 38 in die Umgebung abgelassen wird. Da das Subsystem 38 jedoch zur Wahrung seiner eigenen Funktionsfähigkeit selbst Druckluft benötigt, muss diese möglichst schnell über eine pneumatische Versorgungsleitung 98 von dem Mehrkreisschutzventil 36 wieder aufgefüllt werden. Die dazu notwendige Druckluft kann in einfacher Weise aus dem Druckmittelvorratsbehälter 28 über ein Wechselventil 94 und das Überströmventil 72 zu dem Subsystem 38 geleitet werden. Der Druckablass über das Subsystem 38 erfolgt daher moduliert durch das weitere Steuergerät 46 und die Ablassrate ist nur durch die Nachfüllgeschwindigkeit über die pneumatische Versorgungsleitung 98 und die Entlüftung 34 limitiert. Gemäß der dargestellten Ausführungsform würde dabei gleichzeitig auch eventuell überschüssige Druckluft aus dem Druckmittelvorratsbehälter 30 abgelassen werden.

Erfindungsgemäß ist vorgesehen, dass durch das Sperren des Überströmventils 104 im Defektfall das Druckniveau in dem Vorratsbehälter 100 zunächst aufrechterhalten wird. Dies ist besonders vorteilhaft, wenn der Vorratsbehälter sehr groß ist, wie zum Beispiel bei einer Luftfederung oder bei einem Betonmischertank. Nachdem das Druckniveau in dem Druckmittelvorratsbehälter 28 auf ein neues zulässiges Niveau abgesenkt wurde, sendet die gemeinsame Steuerelektronik 44 eine entsprechende Nachricht über den Datenbus 48 an das weitere Steuergerät 46. Die Absenkung des Druckniveaus in dem Druckmittelvorratsbehälter 28 kann dabei in normaler Weise durch den üblichen Druckmittelverbrauch während einer Betriebsbremsung erfolgen. Diese Art der Druckabsenkung ist besonders vorteilhaft, wenn das Druckmittel nicht unter höchsten Drücken in dem Druckmittelvorratsbehälter 28 bevorratet wird. Eine eventuelle kurze Überbelastung der Betriebsbremszylinder 84, 86 kann dann toleriert werden. Wenn der Druckmittelvorratsbehälter verhältnismäßig klein ist, kann ebenfalls der Druckabbau während normaler Betriebsbremsungen erfolgen. In diesem Fall ist die Anzahl möglicher Bremsvorgänge, während derer ein überhöhter Bremsdruck auf den Betriebsbremszylindern 84, 86 lastet sehr klein. Zum Beispiel wird bei einer druckluftbetriebenen Betriebsbremse mit etwa 80 Normlitern Anlagenvolumen pro durchschnittlichem Bremsvorgang zwischen 0,5 bar und 1 bar an Druck abgebaut, weshalb bereits nach 3 bis 4 Bremsungen ausreichend Druck abgebaut ist. Ein zusätzlicher bereits beschriebener Druckabbau über ein Subsystem ist jedoch auch möglich. Die anschließende Überwachung des Druckniveaus in dem Druckmittelvorratsbehälter 28 wird dabei wiederum über den Drucksensor 40 realisiert. Zuvor kann die gemeinsame Steuerelektronik 44 bereits neue Werte für den Druckreglerabschaltdruck und/oder die Druckbegrenzung der Druckmittelversorgungseinrichtung 32 festlegen, die an den nunmehr zulässigen höchsten Druck in dem Druckmittelvorratsbehälter 28 angepasst sind. Ist das Druckniveau in dem ausgefallenen Regelkreis von Beginn an unterhalb des zulässigen Höchstwerts, bei einem Ausfall des EBS-Bremssystems, so können direkt angepassten Werte verwendet werden. Sinkt das Druckniveau in dem Vorratsbehälter 100 aufgrund von einem Druckmittelverbrauch in dem separierten an dem Teilsystemanschluss 102 angeschlossenen Teilsystem ab, so dass ein Nachfördern von Druckmittel notwendig ist, so kann das Überströmventil 104 für die notwendige Nachförderphase wieder geöffnet werden. Die gemeinsame Steuerelektronik 44 kann für die Nachförderphase die neuen angepassten Werte für den Druckreglerabschaltdruck und/oder die Druckbegrenzung der Druckmittelversorgungseinrichtung 32 auf normale Betriebswerte zurücksetzen, um eine für das an dem Teilsystemanschluss 102 angeschlossene Teilsystem optimale Nachförderung zu ermöglichen. Nachdem das Nachfördern beendet ist, können die neuen angepassten Werte wiederhergestellt werden, wobei wieder ein Ablassen von Druck aus dem Druckmittelvorratsbehälter 28 notwendig sein kann. Durch das Sperren des Überströmventils 74 kann ein unerwünschter Druckanstieg in dem Druckmittelvorratsbehälter 28 jedoch vermieden werden. Ein analoges Vorgehen ist bezüglich des Druckmittelvorratsbehälters 30 möglich. Wird im Gegensatz zu der hier dargestellten druckluftbetriebenen Ausführungsform eine hydraulische Ausführungsform mit einem flüssigen Druckmittel verwendet, so wird im Defektfall die Pumpe mit einem reduzierten Abschaltdruck betrieben und bereits unter Druck gespeichertes Druckmittel kann in analoger Weise über einen Rückfluss in einen drucklosen Vorratsbehälter zurückgeführt und/oder während der normalen Betriebsbremsungen abgebaut werden. Die Hydraulikpumpe kann elektrisch betrieben werden, wobei der zu erwartende Defektfall der hydraulischen Betriebsbremse einen Ausfall von Magnetventilen zur Druckmodulation umfasst. Die ausgefallenen Magnetventile sind neben der normalen Betriebsbremsfunktion noch für Sonderfunktionen wie ABS, ESP und ACC zuständig. Eine Druckmittelförderung durch den Fahrzeugmotor soll nach wie vor möglich sein, jedoch zu einem reduzierten Druck erfolgen. Die zeitweise Sperrung der Druckversorgung zur Optimierung der Systemeigenschaften kann analog zu der druckluftbetriebenen Ausführungsform erfolgen. Die Kraft des Bremsaktuators kann optional über einen entsprechenden Sensor erfasst werden. Ebenso ist die Raddrehzahl über einen aktiven Raddrehzahlsensor detektierbar.

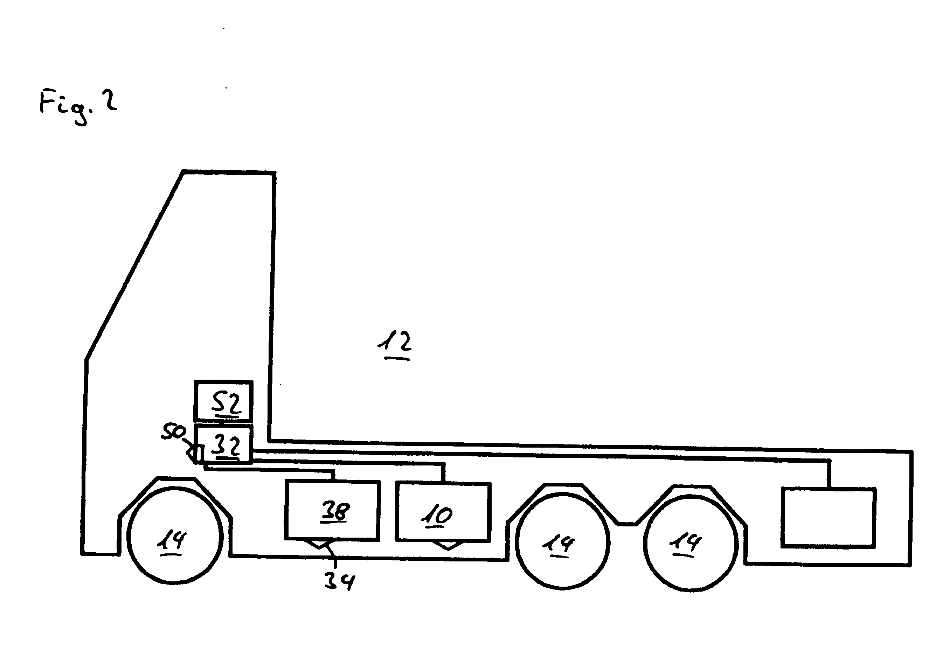

Figur 2 zeigt eine vereinfachte Darstellung eines Nutzfahrzeugs mit einer erfindungsgemäßen Vorrichtung. Ein in Figur 2 dargestelltes Nutzfahrzeug 12 umfasst mehrere Achsen mit Rädern 14, welche von einem EBS-Bremssystem 10 separat mit einem Bremsdruck beaufschlagt werden können. Als weitere Komponenten des Nutzfahrzeugs 12 sind wieder der Drucklufterzeuger 52, die Druckmittelversorgungseinrichtung 32 mit dem integrierten Druckregler 50 und ein Druckluftverbrauchendes Subsystem 38 mit eigener Entlüftung 34 dargestellt. Die einzelnen dargestellten Komponenten des Nutzfahrzeugs sind dabei sowohl pneumatisch als auch elektrisch miteinander gekoppelt.

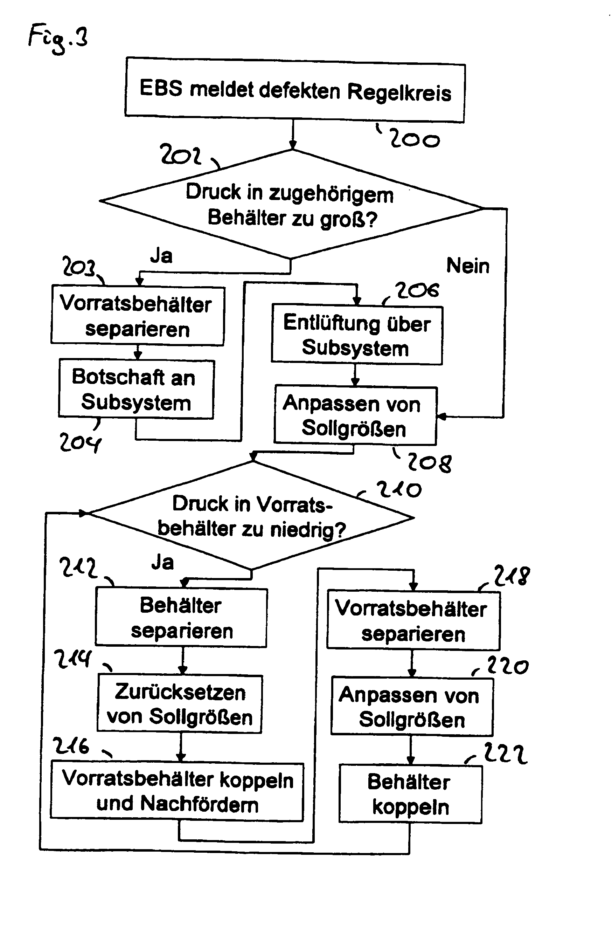

Figur 3 zeigt ein Flussdiagramm eines erfindungsgemäßen Verfahrens. Ausgangspunkt ist der Schritt 200, in dem das EBS-Bremssystem einen defekten, das heißt ausgefallenen, Regelkreis zunächst detektiert und anschließend über den CAN-Bus an die gemeinsame Steuerelektronik meldet. Die gemeinsame Steuerelektronik überprüft zunächst in Schritt 202, ob der Druck in dem dem ausgefallenen Regelkreis zugehörigen Druckmittelvorratsbehälter oberhalb eines zulässigen Höchstwerts liegt, wobei der Höchstwert insbesondere von der Belastbarkeit der Bremszylinder abhängig ist. Falls die Überprüfung einen zu hohen Druck ergibt, Schritt 202-Ja, wird in Schritt 203 zunächst ein Vorratsbehälter eines nicht betroffenen Teilsystems separiert, um kein Druckmittel zu vergeuden und eine optimale Versorgung des nicht betroffenen Teilsystems zu ermöglichen. Das nicht betroffene Teilsystem wird insbesondere auch nicht zum Ablassen von Druck verwendet. Anschließend wird in Schritt 204 von der gemeinsamen Steuerelektronik eine Botschaft an ein Subsystem des Nutzfahrzeugs gesendet, die eine Anweisung zum Druckablassen umfasst. Das Subsystem öffnet in Schritt 206 seine eigene Entlüftung wie bereits im Zusammenhang mit Figur 1 beschrieben und sorgt so für eine Druckanpassung in dem Druckmittelvorratsbehälter. Nachdem die Anpassung des Druckniveaus in dem Druckmittelvorratsbehälter abgeschlossen ist, sendet die gemeinsame Steuerelektronik eine weitere Botschaft an das Subsystem, die dieses veranlasst die Entlüftung einzustellen. Die Schritte 204 und 206 sind optional und können auch entfallen, wenn ein überhöhtes Druckniveau während normaler Betriebsbremsungen abgebaut werden soll. Anschließend passt die gemeinsame Steuerelektronik in Schritt 208 die Sollgrößen der Druckmittelversorgungseinrichtung an die neuen Gegebenheiten an, das heißt insbesondere, dass ein reduzierter Druckreglerabschaltdruck und eine reduzierte Druckbegrenzung voreingestellt werden. In Schritt 210 wird der Druck in dem separierten Vorratsbehälter überwacht. Sinkt er unter einen einstellbaren Schwellwert, Schritt 210-Ja, so wird in Schritt 212 der Behälter der Betriebsbremse separiert, in Schritt 214 die Anpassung der Sollgrößen zurückgenommen und in Schritt 216 der in Schritt 203 separierte Vorratsbehälter wieder an die Druckmittelversorgung gekoppelt sowie eine Nachförderung von Druckmedium durchgeführt, die das Druckniveau in dem Vorratsbehälter des nicht betroffenen Drucksystems wieder erhöht. Nachdem die Nachförderung beendet ist, wird in Schritt 218 der Vorratsbehälter wieder separiert und in Schritt 220 werden die Sollgrößen wieder an der defekten Regelkreis angepasst. Schließlich wird in Schritt 222 der Behälter der Betriebsbremse wieder gekoppelt und bei Schritt 210 fortgefahren.

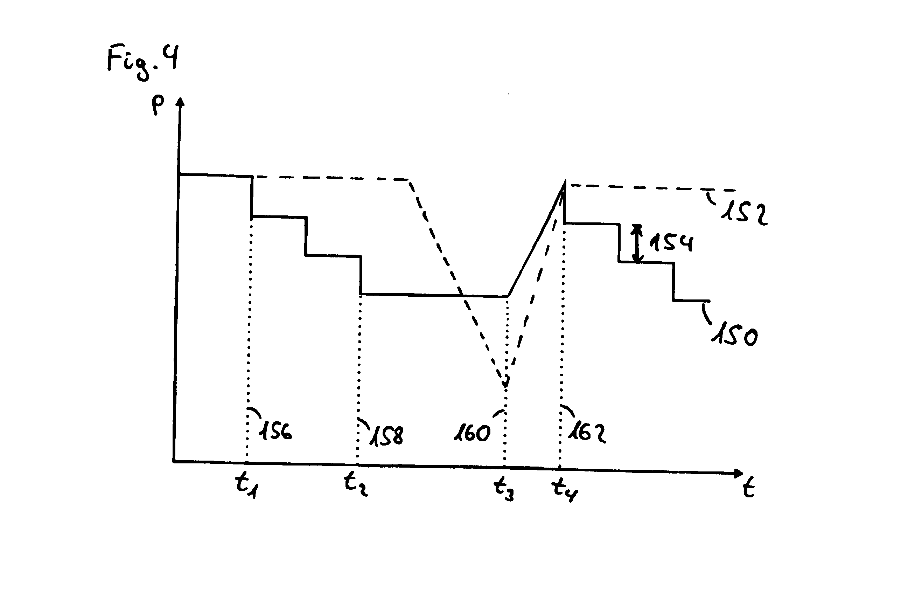

Figur 4 zeigt einen zeitlichen Druckverlauf in einem Behälter der Betriebsbremse und einem Vorratsbehälter eines nicht betroffenen Teilsystems. Aufgetragen ist auf der x-Achse die Zeit t und auf der y-Achse der Druck p. Ausgehend von einem normalen Betriebsdruck wird zu einem Zeitpunkt t₁ 156 ein defekter Regelkreis festgestellt. Infolgedessen wird eine Druckabsenkung in dem Behälter der Betriebsbremse durchgeführt, weshalb ein verfügbarer Betriebsbremsdruck 150 absinkt. Die Absenkung wird in diesem Beispiel während der normalen Betriebsbremsungen vorgenommen, wobei verbrauchtes Druckmittel nicht durch eine Nachförderung ersetzt wird. Nach jedem Bremszyklus sinkt der verfügbare Bremsdruck um eine Druckdifferenz Δp ab. Ist zu einem Zeitpunkt t₂ 158 ein zulässiges Druckniveau in dem Behälter der Betriebsbremse erreicht, so wird der Druckabbau beendet. Währenddessen wird der Versorgungsdruck in dem Vorratsbehälter eines nicht betroffenen Teilsystems durch Separierung aufrechterhalten. Der verfügbare Vorratsbehälterdruck 152 bleibt daher zunächst konstant. Durch Verbrauch sinkt der Vorratsdruck 152 jedoch ab, bis der Vorratsdruck 154 zu einem Zeitpunkt t₃ 160 eine einstellbare Schwelle unterschreitet. Eine Nachförderphase beginnt, bei der die Separierung des Vorratsbehälters aufgehoben wird und Druckmittel in den Vorratsbehälter und, falls der Behälter der Betriebsbremse nicht zuvor separiert wurde, den Behälter der Betriebsbremse nachgefördert wird. Um eine optimale Versorgung des nicht betroffenen Teilsystems sicherzustellen, erfolgt die Nachförderung bis zu einem üblichen von dem Defektfall unabhängigen Druckniveau bei einem Zeitpunkt t₄ 162. Anschließend muss dann erneut der Vorratsbehälter separiert und Druck aus dem Behälter abgebaut werden. Das erneute Druckabbauen ist vermeidbar, wenn der Behälter der Betriebsbremse vor Beginn der Nachförderung separiert wird. Zwischen den Zeitpunkten t₂ und t₃ erfolgt eine Nachförderung in den Behälter nur bis zu einem an den defekten Regelkreis angepassten Druckniveau, weshalb der Betriebsbremsdruck 150 in dieser Zeit zur Vereinfachung als konstant dargestellt wird.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: EBS-Bremssystem
- 12: Nutzfahrzeug
- 14: Rad
- 16: Druckregelmodul
- 18: Druckregelmodul
- 20: elektronische Steuereinheit
- 22: Bremswertgeber
- 24: Bremszylinder
- 26: Bremszylinder
- 28: Druckmittelvorratsbehälter
- 30: Druckmittelvorratsbehälter
- 32: Druckmittelversorgungseinrichtung
- 34: Entlüftung
- 36: Mehrkreisschutzventil
- 38: Subsystem
- 40: Drucksensor
- 42: Drucksensor
- 44: gemeinsame Steuerelektronik
- 46: weiteres Steuergerät
- 48: Datenbus
- 50: Druckregler
- 52: Drucklufterzeuger
- 54: Absperrventil
- 56: Regenerationsventil
- 58: Rückschlagventil
- 60: Filter
- 62: Drucksensor
- 64: 3/2-Wegeventil
- 66: 3/2-Wegeventil
- 68: Steuerleitung
- 70: Steuerleitung
- 72: Überströmventil
- 74: Überströmventil
- 76: Überströmventil
- 78: Überströmventil
- 80: Anhängeranschluss
- 82: Drucksensor
- 84: Drucksensor
- 86: Drucksensor
- 88: Regelkreis Vorderachse
- 90: Regelkreis Hinterachse
- 92: Komponenten Subsystem
- 94: Wechselventil
- 96: weiteres Ablassventil
- 98: pneumatische Versorgungsleitung
- 100: Vorratsbehälter
- 102: Teilsystemanschluss
- 104: Überströmventil
- 106: Steuerleitung
- 150: Betriebsbremsdruck
- 152: Vorratsbehälterdruck
- 154: Druckdifferenz Δp
- 156: Zeitpunkt t₁
- 158: Zeitpunkt t₂
- 160: Zeitpunkt t₃
- 162: Zeitpunkt t₄
- 200: EBS meldet defekten Regelkreis
- 202: Druck in zugehörigem Behälter zu groß?
- 203: Vorratsbehälter separieren
- 204: Botschaft an Subsystem
- 206: Entlüftung über Subsystem
- 208: Anpassen von Sollgrößen
- 210: Druck in Vorratsbehälter zu niedrig?
- 212: Behälter separieren
- 214: Zurücksetzen auf Sollgrößen
- 216: Vorratsbehälter koppeln und Nachfördern
- 218: Vorratsbehälter separieren
- 220: Anpassen von Sollgrößen
- 222: Behälter koppeln

## Patentansprüche

1. Verfahren zum Steuern einer Druckmittelversorgungseinrichtung (32) eines Nutzfahrzeugs (12), wobei
- bei einem Ausfall eines Regelkreises (88; 90) eines EBS-Bremssystems (10), d.h. im Redundanzfall, ein Redundanzkreis wirksam wird, welcher einen Redundanzdruck zur Bremsung des Fahrzeugs (12) bereitstellt, und
- weiterhin der Druck in einem dem ausgefallenen Regelkreis (88; 90) zugeordneten Druckmittelvorratsbehälter (28; 30) auf einen für einen zugeordneten Bremszylinder (24; 26) nicht überlastenden Wert eingestellt wird,
**dadurch gekennzeichnet, dass** im Redundanzfall zumindest ein verbraucherseitig an einem Teilsystemanschluss (102) der Druckmittelversorgungseinrichtung (32) angeschlossenes Teilsystem mit einem eigenem Vorratsbehälter (100) von der Druckmittelversorgungseinrichtung (32) separiert wird, um eine Druckanpassung in dem Teilsystem zu verhindern.

2. Verfahren nach Anspruch 1, **dadurch gekennzeichnet, dass** die Separierung durch das Sperren eines dem Teilsystemanschluss (102) des Teilsystems zugeordneten Überströmventils (104) erreicht wird.

3. Verfahren nach Anspruch 1 oder 2, **dadurch gekennzeichnet, dass** im Redundanzfall der Druckreglerabschaltdruck und/oder die Druckbegrenzung der Druckmittelversorgungseinrichtung (32) auf einen vom Normalbetrieb verschiedenen Wert verändert wird.

4. Verfahren nach Anspruch 3, **dadurch gekennzeichnet,**
- **dass** bei einer notwendigen Nachförderung von Druckmittel für das nicht defekte Teilsystem ein Druckreglerabschaltdruck und/oder eine Druckbegrenzung der Druckmittelversorgungseinrichtung (32) für die Nachförderphase auf einen im Normalbetrieb üblichen Wert eingestellt wird und
- **dass** nach Beendigung der Nachförderung eine erneute Druckanpassung aufgrund des ausgefallenen Regelkreises erfolgt.

5. Verfahren nach Anspruch 4, **dadurch gekennzeichnet, dass** während der notwendigen Nachförderung von Druckmittel für das nicht defekte Teilsystem der ausgefallene Regelkreis (88; 90) durch ein Überströmventils (74; 76) von einer Nachversorgung ausgeschlossen wird, um eine in diesem Regelkreis (88; 90) unerwünschte Druckerhöhung zu vermeiden.

6. Verfahren nach einem der vorhergehenden Ansprüche, **dadurch gekennzeichnet, dass** der sich in dem Druckmittelvorratsbehälter (28; 30) einstellende Druck mit einem Drucksensor (40; 42) erfasst wird, wobei der gemessene Druck an eine gemeinsame Steuerelektronik (44) einer Druckmittelversorgungseinrichtung (32) übertragen wird.

7. Verfahren nach einem der vorhergehenden Ansprüche, **dadurch gekennzeichnet,**
- **dass** bei einem Ausfall der elektronischen Steuereinheit (20) des EBS-Bremssystems (10) die aktuellen Bremszylinderdrücke nicht mehr an eine gemeinsame Steuerelektronik (44) der Druckmittelversorgungseinrichtung (32) übermittelt werden und
- **dass** die gemeinsame Steuerelektronik (44) daraufhin den Druckreglerabschaltdruck und/oder die Druckbegrenzung der Druckmittelversorgungseinrichtung (32) reduziert.

8. Verfahren nach einem der vorhergehenden Ansprüche, **dadurch gekennzeichnet,**
- **dass** eine aktuelle Fehlerbotschaft, die zumindest den Fehlerstatus der einzelnen Druckmodule (16, 18) beinhaltet, nicht vollständig an eine gemeinsame Steuerelektronik (44) der Druckmittelversorgungseinrichtung (32) übermitteln wird und
- **dass** die gemeinsame Steuerelektronik (44) daraufhin den Druckreglerabschaltdruck und/oder die Druckbegrenzung der Druckmittelversorgungseinrichtung (32) reduziert.

9. Verfahren nach einem der vorhergehenden Ansprüche, **dadurch gekennzeichnet, dass** Druckluft als Druckmittel verwendet wird.

10. Verfahren nach Anspruch 9, **dadurch gekennzeichnet, dass** ein pneumatischer oder pneumatisch-mechanischer Redundanzkreis verwendet wird.

11. Verfahren nach einem der Ansprüche 1 bis 8, **dadurch gekennzeichnet, dass** ein flüssiges Medium als Druckmittel verwendet wird.

12. Vorrichtung zum Steuern einer Druckmittelversorgungseinrichtung (32) eines Nutzfahrzeugs (12) mit einer gemeinsamen Steuerelektronik (44), die geeignet ist, eine Fehlerbotschaft von einer elektronischen Steuereinheit (20) eines EBS-Bremssystems (10) zu empfangen und den Druck im einem einem ausgefallenen Regelkreis (88; 90) zugeordneten Druckmittelvorratsbehälter (28; 30) auf einen für den zugeordneten Bremszylinder (24; 26) nicht überlastenden Wert einzustellen, **dadurch gekennzeichnet, dass** die gemeinsame Steuerelektronik (44) geeignet ist, bei einem Ausfall eines Regelkreises (88; 90) eines EBS-Bremssystems (10), d.h. im Redundanzfall, zumindest ein Verbraucherseitig an einem Teilsystemanschluss (102) der Druckmittelversorgungseinrichtung (32) angeschlossenes Teilsystem mit einem eigenem Vorratsbehälter (100) von der Druckmittelversorgungseinrichtung (32) zu separieren, um eine Druckanpassung in dem Teilsystem zu verhindern.

13. Vorrichtung nach Anspruch 12, **dadurch gekennzeichnet, dass** die Separierung des Teilsystems durch das Sperren eines dem Teilsystemanschluss (102) zugeordneten Überströmventils (104) erfolgt.

14. Vorrichtung nach Anspruch 12 oder 13, **dadurch gekennzeichnet, dass** die gemeinsame Steuerelektronik (44) geeignet ist, im Redundanzfall den Druckreglerabschaltdruck und/oder die Druckbegrenzung der Druckmittelversorgungseinrichtung (32) auf einen vom Normalbetrieb verschiedenen Wert zu verändern

15. Vorrichtung nach einem der Ansprüche 12 bis 14, **dadurch gekennzeichnet,**
- **dass** die gemeinsame Steuerelektronik (44) geeignet ist, bei einer notwendigen Nachförderung von Druckmittel für das nicht defekte Teilsystem einen Druckreglerabschaltdruck und/oder eine Druckbegrenzung der Druckmittelversorgungseinrichtung (32) für die Nachförderphase auf einen im Normalbetrieb üblichen Wert einzustellen und
- **dass** die gemeinsame Steuerelektronik (44) geeignet ist, nach Beendigung der Nachförderung eine erneute Druckanpassung aufgrund des ausgefallenen Regelkreises durchzuführen.

16. Vorrichtung nach einem der Ansprüche 12 bis 15, **dadurch gekennzeichnet, dass** die gemeinsame Steuerelektronik (44) geeignet ist, während der notwendigen Nachförderung von Druckmittel für das nicht defekte Teilsystem den ausgefallene Regelkreis (88; 90) durch ein Überströmventil (74; 76) von einer Nachversorgung auszuschliessen, um eine in diesem Regelkreis (88; 90) unerwünschte Druckerhöhung zu vermeiden.

17. Vorrichtung nach einem der Ansprüche 12 bis 16, **dadurch gekennzeichnet, dass** die gemeinsame Steuerelektronik (44) geeignet ist, einen Druckreglerabschaltdruck und/oder eine Druckbegrenzung der Druckmittelversorgungseinrichtung (32) auf einen vom Normalbetrieb verschiedenen Wert zu verändern.

18. Vorrichtung nach einem der Ansprüche 12 bis 17, **dadurch gekennzeichnet, dass** die gemeinsame Steuerelektronik (44) geeignet ist, zumindest ein in einer Versorgungsleitung (102) eines nicht defekten Teilsystems angeordnetes Überströmventil (104) zu sperren, um eine Druckabsenkung in dem nicht defekten Teilsystem zu verhindern.

19. Vorrichtung nach einem der Ansprüche 12 bis 18, **dadurch gekennzeichnet, dass** die gemeinsame Steuerelektronik (44) geeignet ist, während einer notwendigen Nachförderung von Druckmittel für ein nicht defektes Teilsystem den ausgefallenen Regelkreis (88; 90) durch ein Überströmventil (74; 76) von einer Nachversorgung auszuschließen, um eine unerwünschte Druckerhöhung zu verhindern.

## Claims

1. Method of controlling a pressurised-medium supply system (32) of a commercial vehicle (12), wherein
- in the event of failure of a closed-control circuit (88; 90) of an EBS brake system (10), i.e. in the case of redundancy, a redundancy circuit becomes operative that provides a redundancy pressure for braking the vehicle (12), and
- furthermore the pressure in a pressurised-medium storage reservoir (28; 30) associated with said failed closed-control circuit (88; 90) is adjusted to a value not overloading for an associated brake cylinder (24; 26); **characterised in that** in the redundancy case at least one sub-system connected on the load-side to a sub-system connector (102) of said pressurised-medium supply system (32), which comprises a separate storage reservoir (100), is separated from said pressurised-medium supply system in order to prevent pressure adjustment in said sub-system.

2. Method according to Claim 1, **characterised in that** the separation is achieved by shutting off an overflow valve (104) associated with said sub-system connector (102) of said sub-system.

3. Method according to Claim 1 or 2, **characterised in that** in the case of redundancy the pressure regulator shut-off pressure and/or the pressure limiting function of said pressurised-medium supply means (32) is/are changed to a value different from the regular operation level.

4. Method according to Claim 3, **characterised in**
- **that** in the event of necessary subsequent supply of pressurised medium for said non-defective sub-system a pressure regulator shut-off pressure and/or a pressure limiting function of said pressurised-medium supply means (32) is set to a level common in regular operation for the subsequent supply phase, and
- **that** after completion of the subsequent supply repeated pressure adjustment takes place on account of said failed closed-control circuit.

5. Method according to Claim 4, **characterised in that** during the necessary subsequent supply of pressurised medium for said non-defective sub-system, said failed closed-control circuit (88; 90) is precluded from subsequent supply by means of an overflow valve (74; 76) so as to avoid a pressure increase that is undesirable **in that** closed-control circuit (88; 90).

6. Method according to any of the preceding Claims, **characterised in that** the pressure level adjusting in said pressurised-medium storage reservoir (28; 30) is detected by means of a pressure gauge (40; 42), with the pressure so measured being communicated to a common electronic control unit (44) of a pressurised-medium supply system (32).

7. Method according to any of the preceding Claims, **characterised in**
- **that** in the event of failure of the electronic control unit (20) of said EBS brake system the current brake cylinder pressure levels are no longer communicated to a common electronic control unit (44) of said pressurised-medium supply system (32) and
- **that** said common electronic control unit (44) responds by reducing the pressure regulator shut-off pressure level and/or the pressure limiting function of said pressurised-medium supply system (32).

8. Method according to any of the preceding Claims, **characterised in**
- **that** a current error message, which includes at least the error status of the individual pressure modules (16, 18), is not completely communicated to a common electronic control unit (44) of said pressurised-medium supply system (32), and
- **that** said common electronic control unit (44) responds by reducing the pressure regulator shut-off pressure level and/or the pressure limiting function of said pressurised-medium supply system (32).

9. Method according to any of the preceding Claims, **characterised in that** compressed-air is used as pressurised medium.

10. Method according to Claim 9, **characterised in that** a pneumatic or pneumatic-mechanical redundancy circuit is employed.

11. Method according to any of the Claims 1 to 8, **characterised in that** a liquid medium is used as pressurised medium.

12. Device for controlling a pressurised-medium supply system (32) of a commercial vehicle (12) comprising a common electronic control unit (44) that is suitable for receiving an error message from an electronic control unit (20) of an EBS brake system (10) and for adjusting the pressure to a value not overloading for the associated brake cylinder (24; 26) in a pressurised-medium storage reservoir (28; 30) associated with a failed closed-control circuit (88; 90), **characterised in that** said common electronic control unit (44) is suitable for separating at least one sub-system including a separate storage reservoir (100), which is connected to a sub-system connector (102) of said pressurised-medium supply system (32) on the load side in the event of failure of a closed-control circuit (88; 90) of an EBS brake system (10), i.e. in the case of redundancy, from said pressurised-medium supply system (32) in order to prevent pressure adjustment in said sub-system.

13. Device according to Claim 12, **characterised in that** the separation of said sub-system takes place by shut-off of an overflow valve (104) associated with said sub-system connector (102).

14. Device according to Claim 12 or 13, **characterised in that** said common electronic control unit (44) is suitable for changing the shut-off pressure level of said pressure regulator and/or said pressure-limiting function of said pressurised-medium supply system (32) to a level different from the regular operation level in the case of redundancy.

15. Device according to any of the Claims 12 to 14, **characterised in**
- **that** said common electronic control unit (44) is suitable for adjusting a pressure regulator shut-off pressure and/or a pressure-limiting function of said pressurised-medium supply system (32) to a level common in regular operation for the subsequent supply phase in the event of a necessary subsequent supply of pressurised medium for the non-defective sub-system, and
- **that** said common electronic control unit (44) is suitable to perform a repeated pressure adaption upon completion of subsequent supply on account of said failed closed-control circuit.

16. Device according to any of the Claims 12 to 15, **characterised in that** said common electronic control unit (44) is suitable for precluding said failed closed-control circuit (88; 90) from subsequent supply by means of an overflow valve (74; 76) so as to avoid a pressure increase that is undesirable **in that** closed-control circuit (88; 90) during the necessary subsequent supply of pressurised medium for the non-defective sub-system.

17. Device according to any of the Claims 12 to 16, **characterised in that** said common electronic control unit (44) is suitable for changing a pressure regulator shut-off pressure and/or a pressure-limiting function of said pressurised-medium supply system (32) to a level different from the level in regular operation.

18. Device according to any of the Claims 12 to 17, **characterised in that** said common electronic control unit (44) is suitable to shut off at least one overflow valve (104) disposed in a supply line (102) of a non-defective sub-system in order to prevent reduction of pressure in said non-defective sub-system.

19. Device according to any of the Claims 12 to 18, **characterised in that** said common electronic control unit (44) is suitable for precluding said failed closed-control circuit (88; 90) from subsequent supply by means of an overflow valve (74; 76) in order to prevent undesirable increase of pressure during a necessary subsequent supply of pressurised medium for a non-defective sub-system.

## Revendications

1. Procédé de commande d'un dispositif (32) d'alimentation en fluide sous pression d'un véhicule (12) utilitaire, dans lequel
- si un circuit (88; 90) de réglage d'un système (10) de freinage EBS est défaillant, c'est-à-dire dans le cas d'une redondance, devient efficace un circuit de redondance qui met à disposition une pression de redondance pour le freinage du véhicule (12), et
- en outre, la pression dans un réservoir (28; 30) de fluide sous pression, associé au circuit (88; 90) de réglage qui a subi une défaillance, est réglée à une valeur ne surchargeant pas un cylindre (24; 26) de frein associé,
**caractérisé en ce que**, en cas de redondance, au moins un sous-système, raccordé du côté de l'utilisateur à un raccord (102) de sous-système du dispositif (32) d'alimentation en fluide sous pression et ayant son propre réservoir (100), est séparé du dispositif (32) d'alimentation en fluide sous pression, pour empêcher une adaptation de la pression dans le sous-système.

2. Procédé suivant la revendication 1, **caractérisé en ce que** l'on obtient la séparation par la fermeture d'une vanne (104) de décharge associée au raccord (102) du sous-système.

3. Procédé suivant la revendication 1 ou 2, **caractérisé en ce que**, dans le cas de redondance, la pression de mise à l'arrêt du régleur de pression et/ou la limitation de pression du dispositif (32) d'alimentation en fluide sous pression est modifiée à une valeur différente de celle du fonctionnement normal.

4. Procédé suivant la revendication 3, **caractérisé**
- **en ce que**, si un transport ultérieur de fluide sous pression est nécessaire pour le sous-système non défectueux, une pression de mise à l'arrêt du régleur de pression et/ou une limitation de pression du dispositif (32) d'alimentation en fluide sous pression, pour la phase de transport ultérieur, est réglée à une valeur habituelle en fonctionnement normal et
- **en ce que**, après la fin du transport ultérieur, une nouvelle adaptation de la pression s'effectue en raison du circuit de réglage défaillant.

5. Procédé suivant la revendication 4, **caractérisé en ce que**, pendant le transport ultérieur nécessaire du fluide sous pression pour le sous-système non défectueux, le circuit (88; 90) de réglage défaillant est exclu par une vanne (74; 76) de décharge d'une alimentation ultérieure, pour empêcher une élévation de la pression qui n'est pas souhaitée dans ce circuit (88; 90) de réglage.

6. Procédé suivant l'une des revendications précédentes, **caractérisé en ce que** l'on détecte par un capteur (40; 42) de pression la pression s'établissant dans le réservoir (28; 30) de fluide sous pression, la pression mesurée étant transmise à une électronique (44) commune de commande à un dispositif (32) d'alimentation en fluide sous pression.

7. Procédé suivant l'une des revendications précédentes, **caractérisé**
- **en ce que**, lorsque l'unité (20) de commande électronique du système (10) de freinage EBS est défaillante, les pressions instantanées du cylindre de frein ne sont plus transmises à une électronique (44) commune de commande du dispositif (32) d'alimentation en fluide sous pression et
- **en ce que** l'électronique (44) commune de commande réduit ensuite la pression de mise à l'arrêt du régleur de pression et/ou la limitation de pression du dispositif (32) d'alimentation en fluide sous pression.

8. Procédé suivant l'une des revendications précédentes, **caractérisé**
- **en ce que** qu'un message d'erreur présent, qui comporte au moins l'état d'erreur des divers modules (16; 18) de pression, n'est pas transmis entièrement à une électronique (44) commune de commande du dispositif (32) d'alimentation en fluide sous pression et
- **en ce que** l'électronique (44) commune de commande réduit ensuite la pression de mise à l'arrêt du régleur de pression et/ou la limitation de pression du dispositif (32) d'alimentation en fluide sous pression.

9. Procédé suivant l'une des revendications précédentes, **caractérisé en ce que** l'on utilise de l'air comprimé comme fluide sous pression.

10. Procédé suivant la revendication 9, **caractérisé en ce que** l'on utilise un circuit de redondance pneumatique ou mécano-pneumatique.

11. Procédé suivant l'une des revendications 1 à 8, **caractérisé en ce que** l'on utilise un fluide liquide comme fluide sous pression.

12. Dispositif de commande d'un dispositif (32) d'alimentation en fluide sous pression d'un véhicule (12) utilitaire, ayant une électronique (44) commune de commande, qui est propre à recevoir un message d'erreur d'une unité (20) électronique de commande d'un système (10) de freinage EBS et à régler la pression dans un réservoir (28; 30) de fluide sous pression associé à un circuit (88; 90) de réglage défaillant à une valeur ne surchargeant pas le cylindre (24; 26) de frein associé, **caractérisé en ce que** l'électronique (44) commune de commande est propre, si un circuit (88; 90) de réglage d'un système (10) de frein EBS est défaillant, c'est-à-dire dans le cas d'une redondance, à séparer au moins un sous-système raccordé du côté utilisateur à un raccord (102) de sous-système du dispositif (32) d'alimentation en fluide sous pression et ayant son propre réservoir (100) du dispositif (32) d'alimentation en fluide sous pression, pour empêcher une adaptation de la pression dans le sous-système.

13. Dispositif suivant la revendication 12, **caractérisé en ce que** la séparation du sous-système s'effectue par la fermeture d'une vanne (104) de décharge associée au raccord (102) du sous-système.

14. Dispositif suivant la revendication 12 ou 13, **caractérisé en ce que** l'électronique (44) commune de commande est propre, dans le cas d'une redondance, à modifier la pression de mise à l'arrêt du régleur de pression et/ou la limitation de pression du dispositif (32) d'alimentation en fluide sous pression jusqu'à une valeur différente de celle du fonctionnement normal.

15. Dispositif suivant l'une des revendications 12 à 14, **caractérisé**
- **en ce que** l'électronique (44) commune de commande est propre à établir, si un transport ultérieur de fluide sous pression est nécessaire pour le sous-système non défectueux, une pression de mise à l'arrêt du régleur de pression et/ou une limitation de pression du dispositif (32) d'alimentation en fluide sous pression, pour la phase de transport ultérieur, à une valeur habituelle en fonctionnement normal et
- **en ce que** l'électronique (44) commune de commande est propre à effectuer, après la fin du transport ultérieur, une nouvelle adaptation de la pression en raison du circuit de réglage défaillant.

16. Dispositif suivant l'une des revendications 12 à 15, **caractérisé en ce que** l'électronique (44) commune de commande est propre, pendant le transport ultérieur nécessaire du fluide sous pression pour le sous-système non défectueux, à exclure d'une alimentation ultérieure le circuit (88; 90) de réglage défaillant par une vanne (74; 76) de décharge, pour empêcher une élévation de la pression qui n'est pas souhaitée dans ce circuit (88; 90) de réglage.

17. Dispositif suivant l'une des revendications 12 à 16, **caractérisé en ce que** l'électronique (44) commune de commande est propre à modifier une pression de mise à l'arrêt du régulateur de pression et/ou de limitation de pression du dispositif (32) d'alimentation en fluide sous pression jusqu'à une valeur différente de celle du fonctionnement normal.

18. Dispositif suivant l'une des revendications 12 à 17, **caractérisé en ce que** l'électronique (44) commune de commande est propre à fermer au moins une vanne (104) de décharge montée dans un conduit (102) d'alimentation d'un sous-système non défectueux pour empêcher un abaissement de la pression dans le sous-système non défectueux.

19. Dispositif suivant l'une des revendications 12 à 18, **caractérisé en ce que** l'électronique (44) commune de commande est propre, pendant le transport ultérieur nécessaire du fluide sous pression pour le sous-système non défectueux, à exclure d'une alimentation ultérieure le circuit (88; 90) de réglage défaillant par une vanne (74; 76) de décharge, à empêcher une élévation de la pression qui n'est pas souhaitée dans ce circuit (88; 90) de réglage.
